(19) Europäisches Patentamt
European Patent Office
Office européen des brevets

(11) **EP 3 739 520 A1**

(12) **EUROPEAN PATENT APPLICATION**

(43) Date of publication:
**18.11.2020 Bulletin 2020/47**

(51) Int Cl.:
*G06N 3/00* (2006.01)    *G06N 20/00* (2019.01)

(21) Application number: **20155347.6**

(22) Date of filing: **04.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2019 KR 20190056870**

(71) Applicant: **Korea Advanced Institute Of Science And Technology**
**Daejeon, 34141 (KR)**

(72) Inventors:
• **Lee, Sang Wan**
  **34141 Daejeon (KR)**
• **An, Su Jin**
  **34141 Daejeon (KR)**

(74) Representative: **V.O.**
**P.O. Box 87930**
**2508 DH Den Haag (NL)**

(54) **METHOD AND APPARATUS FOR HIGHLY EFFICIENT EXPLORING ENVIRONMENT ON METACOGNITION**

(57)    A method and apparatus for exploring an environment with high efficiency based on metacognition may be configured to estimate an uncertainty value for a state space while exploring a first area in the state space, to determine a second area in the state space based on the uncertainty value and to explore the second area.

**FIG. 2**

EP 3 739 520 A1

**Description**

BACKGROUND OF THE INVENTION

1. Technical Field

Various embodiments relate to a method and apparatus for exploring an environment with high efficiency based on metacognition.

2. Description of the Related Art

Recently, reinforcement learning is used in several problems based on a theoretical base for the human's learning process of performing learning through experiences. However, an agent rarely understands a method of exploring the unknown world having infinitely many options. One of limits of such reinforcement learning is the absence of metacognition, that is, the human's unique ability, having a concept for how much the agent autonomously learns.

Metacognition refers to control and regulation for the human's knowledge and cognition area, and includes the human's unique ability to evaluate the uncertainty of its own learning in a learning process. The metacognition ability plays an important role in planning and executing behaviors for academic achievement in the human's learning process. For example, the human uses the metacognition ability in (i) a situation related to whether he or she will explore an already known method in order to solve a given problem, (ii) a situation in which he or she has to select whether to explore another possible method, or (iii) a situation in which he or she has to evaluate the certainty for his or her own decision making. In the case of machine learning, if the method (i) or (ii) is selected, a lot of time is taken for initial learning because an optimization method dependent on a large amount of data is used. Furthermore, if learning for a current environment is insufficient, an agent is likely to be in an exploration-exploitation dilemma. Such a problem is further serious in an online and sequential data learning process scenario.

The human is capable of fast learning through only small experiences based on such metacognition although he or she is exposed to a fully new environment. To understand a computational principle, that is, a basis for the process, is one of fundamental problems of engineering and cognitive psychology.

SUMMARY OF THE INVENTION

According to various embodiments, there are provided an electronic device capable of environment exploration based on metacognition in which a metacognition theory and machine learning have been combined, and an operating method thereof.

According to various embodiments, a method for an electronic device to explore an environment with high efficiency based on metacognition may include estimating an uncertainty value for a state space while exploring a first area in the state space, determining a second area in the state space based on the uncertainty value, and exploring the second area.

According to various embodiments, an electronic device is for highly efficient exploration based on metacognition, and includes an input module configured to input state information and a processor connected to the input module and configured to process the state information. The processor may be configured to estimate an uncertainty value for a state space while exploring a first area in the state space, determine a second area in the state space based on the uncertainty value, and explore the second area.

BRIEF DESCRIPTION OF THE DRAWINGS

FIG. 1 is a diagram illustrating an electronic device according to various embodiments.
FIG. 2 is a diagram for describing a low-dimensional state space which is taken into consideration in the electronic device according to various embodiments.
FIG. 3 is a diagram showing the behavior algorithm of the electronic device according to various embodiments.
FIG. 4 is a diagram for describing a learning model corresponding to the behavior algorithm of FIG. 3.
FIG. 5 is a diagram for describing performance according to the learning model of FIG. 4.
FIGS. 6, 7 and 8 are diagrams for describing characteristics of the electronic device according to various embodiments.
FIG. 9 is a diagram illustrating an operating method of the electronic device according to various embodiments.
FIG. 10 is a diagram illustrating an operation of determining a second area in FIG. 9.

DETAILED DESCRIPTION

Hereinafter, various embodiments of this document are described with reference to the accompanying drawings.

An electronic device according to various embodiments can explore an environment based on metacognition in which a metacognition theory and machine learning have been combined. The electronic device may learn a low-dimensional environment structure model by exploring an environment with high efficiency. In this case, the environment may have an infinite amount of state information and a very complicated structure. In this case, the electronic device may determine an exploration area by computing an estimated value of an environment structure of the learning model based on the metacognition theory and the certainty of the learning model for the estimated value. In this case, the estimated value of the environment structure may correspond to a state vector to be described later, and the certainty may correspond to an uncertainty value to be described later. According to various embodiments, the electronic device can maintain high performance while operating similar to a method in which the human actually learns.

According to various embodiments, in HCI/HRI-related systems or service robotics, a natural interaction and cooperation is possible between the human and an artificial intelligent agent. Furthermore, various embodiments of this document may be applied to big data systems that require learning for a large amount of information (e.g., medical data systems, search engines, real-time big data-based analysis systems, customer information systems, communication systems, social services, and HCI/HRI) and systems (e.g., IoT systems, artificial intelligence speakers, cloud-based environments, intelligent home systems, and service robots) for which the update of learnt information is important because new information is frequently input.

Recently, artificial intelligence (AI) is developed to a level in which the AI can be applied to all industries with the development of deep learning-based technologies and through combinations with the existing technology. Accordingly, there is an increasing need for machine learning, which can rapidly handle an environment that is changed by more effectively learning a given small amount of data or a given large amount of data. In this aspect, it is expected that various embodiments will be applied to a wide range of AI fields. In particular, in a system in which the human-AI cooperates, user friendliness can be increased because a system that learns similar to a method in which the human learns can be implemented.

An environment in which the learning, inference, and cognition technologies of AI can be advanced due to influences, such as the development of big data, the improvement of the information processing ability and a deep learning algorithm, and the development of a cloud-based environment. Accordingly, the application of various embodiments will give various types of help in reducing an unnecessary time of initial learning, the efficient handling of the occurrence of new data, and as a result, performance improvement of a system.

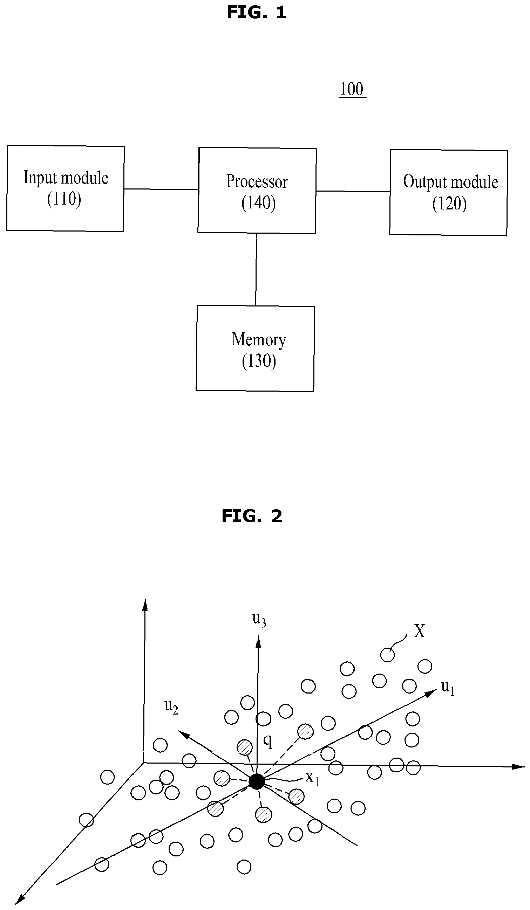

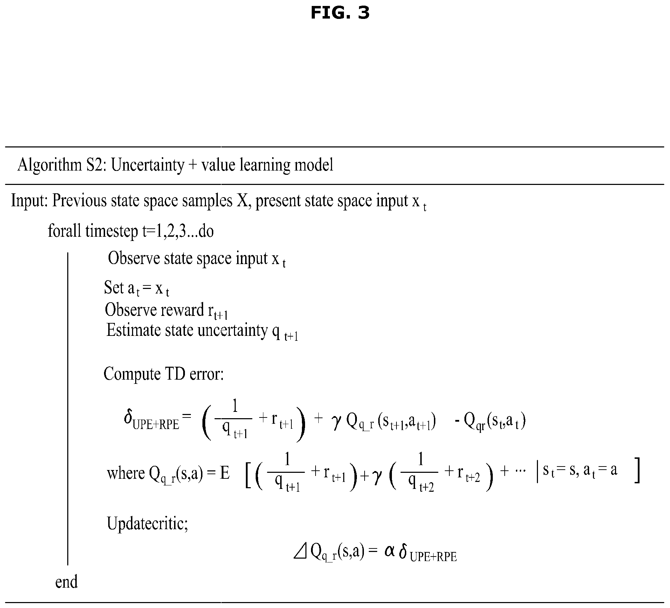

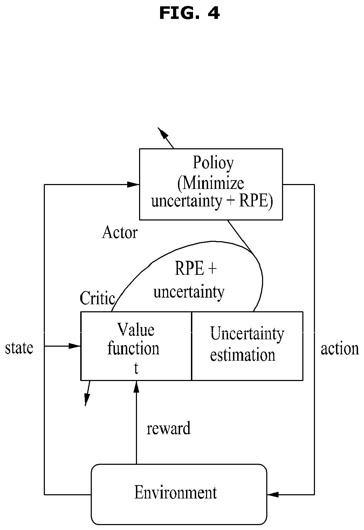

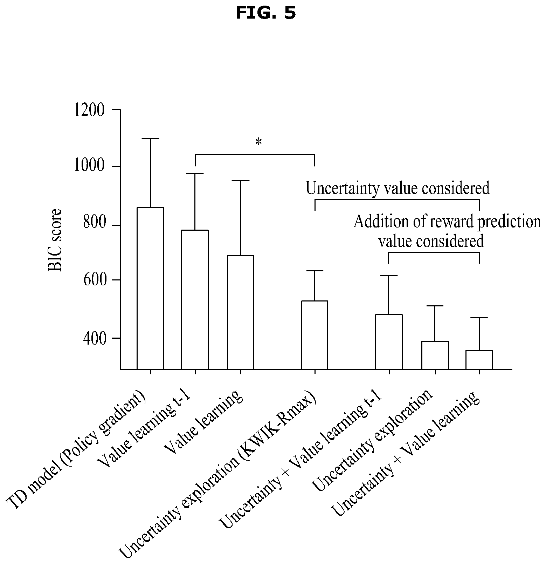

FIG. 1 is a diagram illustrating an electronic device 100 according to various embodiments. FIG. 2 is a diagram for describing a low-dimensional state space which is taken into consideration in the electronic device 100 according to various embodiments. FIG. 3 is a diagram showing the behavior algorithm of the electronic device 100 according to various embodiments. FIG. 4 is a diagram for describing a learning model corresponding to the behavior algorithm of FIG. 3. FIG. 5 is a diagram for describing performance according to the learning model of FIG. 4.

Referring to FIG. 1, the electronic device 100 according to various embodiments may include at least any one of an input module 110, an output module 120, a memory 130 or a processor 140. In a given embodiment, at least any one of the elements of the electronic device 100 may be omitted or one or more other elements may be added to the electronic device 100.

The input module 110 may receive an instruction to be used in an element of the electronic device 100. The input module 110 may include at least any one of an input device configured to enable a user to directly input a command or data to the electronic device 100, a sensor device configured to detect a surrounding environment and generate data, or a communication device configured to receive a command or data from an external device through wired communication or wireless communication. For example, the input device may include at least any one of a microphone, a mouse, a keyboard or a camera. For example, the communication device may establish a communication channel for the electronic device 100 and perform communication through the communication channel.

The output module 120 may provide information to the outside of the electronic device 100. The output module 120 may include at least any one of an audio output device configured to acoustically output information, a display device configured to visually output information or a communication device configured to transmit information to an external device through wired communication or wireless communication.

The memory 130 may store various data generated by at least one element of the electronic device 100. The data may include input data or output data for a program or an instruction related to the program. For example, the memory 130 may include at least any one of a volatile memory or a non-volatile memory.

The processor 140 may control the elements of the electronic device 100 by executing a program of the memory 130, and may perform data processing or operation. The processor 140 may explore a state space based on metacognition. In this case, the processor 140 may estimate an uncertainty value for the state space while exploring the first area of the state space. Furthermore, the processor 140 may determine the second area of the state space based on the uncertainty value, and may explore the second area.

The processor 140 may determine the first area in the state space. To this end, the electronic device 100 may embed state information of a high-dimensional environment in a low-dimensional state space, as illustrated in FIG. 2. The state information may be input by the input module 110 so that the state information can be processed by the processor 140. Furthermore, the processor 140 may determine the first area in the low-dimensional state space. For example, the processor 130 may determine a global area as the first area. The global area is different from a local area, and the range of the global area may be wider than the range of the local area.

The processor 140 may estimate an uncertainty value (q) for the state space while exploring the first area in the state space. At this time, the processor 140 may detect a state vector ($x_t$) by combining state information ($X \in \mathbb{R}^{m \times n}$) of the first area in the state space as illustrated in FIG. 2. To this end, the processor 140 may sample the first area. Furthermore, the processor 140 may measure the uncertainty value (q) based on the state vector ($x_t$). For example, the processor 140 may detect the state vector ($x_t$) through a linear combination of state information (X), and may measure a linear combination coefficient as the uncertainty value (q). In this case, the processor 140 may measure the uncertainty value (q) based on the proximity of the state information (X) and the state vector ($x_t$). For example, the processor 140 may detect a singular vector ($U = [u_1, u_2, \cdots u_n] \in \mathbb{R}^{n \times n}$) based on the state information (X) as represented in Equation 1, and may measure the uncertainty value (q) as represented in Equation 2. The processor 140 may measure the uncertainty value (q) based on the proximity of the singular vector (U) and the state vector ($x_t$). For example, as the singular vector (U) and the state vector ($x_t$) approach, the uncertainty value (q) may be smaller.

$$X^T X = U \Lambda U^T \qquad \ldots (1)$$

In this case, $U = [u_1, u_2, \cdots u_n] \in \mathbb{R}^{n \times n}$ the singular vector (U) may be an orthogonal singular vector set of $\Lambda = diag(\lambda_1, \lambda_2, \ldots \lambda_n)$ and $X^T X$ in which related singular values are $\lambda_1 \geq \lambda_2 \geq \cdots \geq \lambda_k \geq 1 \geq \lambda_{k+1} \geq \lambda_n \geq 0$. $\overline{U} = [u, \cdots u_k] \in \mathbb{R}^{n \times k}$ and $\overline{\Lambda} = (\lambda_1 \ldots \lambda_k) \in \mathbb{R}^{k \times k}$ may be defined based on Equation 1.

$$q = X \overline{U} \overline{\Lambda}^{-1} \overline{U}^T x_t \in \mathbb{R}^m$$

$$\ldots(2) X^T X = U \Lambda U^T$$

According to one embodiment, the processor 140 may operate based on a behavior algorithm, such as that illustrated in FIG. 3, and a learning model, such as that illustrated in FIG. 4. The processor 140 may detect the state vector ($x_t$) from the state information (X) of the first area while exploring the first area. At this time, the processor 140 may detect a reward prediction value (reward; $r_{t+1}$) for the state space while exploring the first area. The processor 140 may estimate an uncertainty value ($q_{t+1}$) for the state space. The processor 140 may update an uncertainty cumulative value ($Q_{q\_r}(s, a)$) based on the uncertainty value ($q_{t+1}$), as represented in Equation 3. In this case, the processor 140 may update the uncertainty cumulative value ($Q_{q\_r}(s, a)$) based on the reward prediction value ($r_{t+1}$) along with the uncertainty value ($q_{t+1}$). The processor 140 may compute a prediction error value ($\delta_{UPE+RPE}$) for the state space using the uncertainty cumulative value ($Q_{q\_r}(s, a)$) as represented in Equation 4. In this case, the processor 140 may compute the prediction error value ($\delta_{UPE+RPE}$) based on the reward prediction value ($r_{t+1}$) along with the uncertainty value ($q_{t+1}$). The processor 140 may compute a critic's value based on the prediction error value ($\delta_{UPE+RPE}$), as represented in Equation 5.

$$Q_{q\_r}(s, a) = E\left[(\frac{1}{q_{t+1}} + r_{t+1}) + \gamma(\frac{1}{q_{t+2}} + r_{t+2}) + \cdots \Big| s_t = s, a_t = a\right] \qquad \ldots(3)$$

In this case, $\gamma$ indicates a temporal discount factor, and may be fixed to 1.

$$\delta_{UPE+RPE} = \left(\frac{1}{q_{t+1}} + r_{t+1}\right) + \gamma Q_{q\_r}(s_{t+1}, a_{t+1}) - Q_{q_r}(s_t, a_t) \qquad ...(4)$$

$$\Delta Q_{q\_r}(s, a) = \alpha \delta_{UPE+RPE} \qquad ...(5)$$

In this case, $\alpha$ may indicate a learning speed.

The processor 140 may determine the second area in the state space based on the uncertainty value (q). In this case, the processor 140 may determine the second area so that the uncertainty value (q) can be reduced. For example, the processor 140 may determine a local area as the second area.

According to one embodiment, the processor 140 may determine the second area the prediction error value ($\delta_{UPE+RPE}$). In this case, the processor 140 may determine the second area based on the critic's value. In this case, the processor 140 may determine the second area with the goal of reducing the uncertainty value ($q_{t+1}$) and obtaining a reward. In this case, the learning model of the electronic device 100 takes into consideration the uncertainty value ($q_{t+1}$) in determining the second area. Accordingly, as illustrated in FIG. 5, performance of the learning model of the electronic device 100 may be better than performance of another learning model. Furthermore, the learning model of the electronic device 100 additionally takes into consideration the reward prediction value ($r_{t+1}$) along with the uncertainty value ($q_{t+1}$). Accordingly, as illustrated in FIG. 5, performance of the learning model of the electronic device 100 may be better than performance of another learning model.

Accordingly, the processor 140 may explore the second area in the state space.

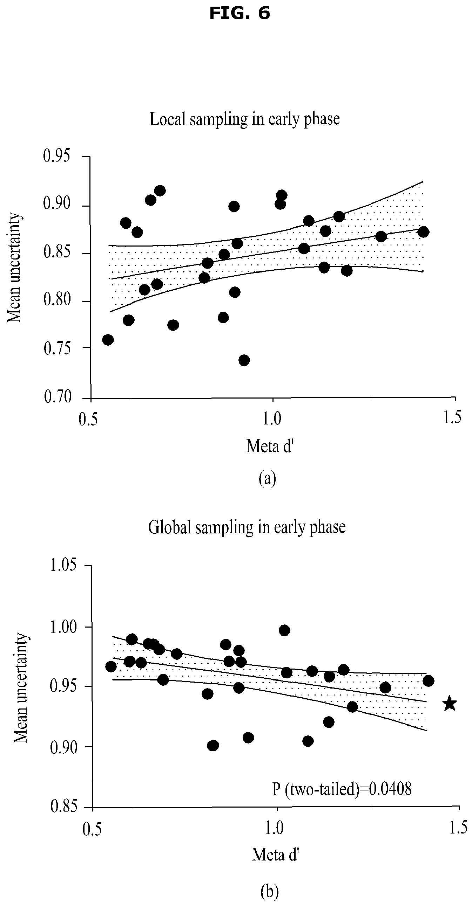

FIGS. 6, 7 and 8 are diagrams for describing characteristics of the electronic device 100 according to various embodiments.

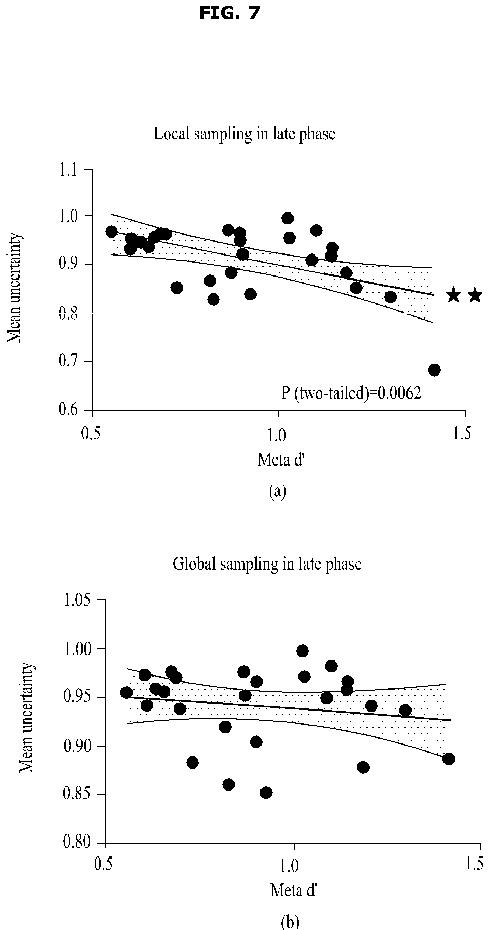

Referring to FIGS. 6 and 7, the electronic device 100 may learn based on metacognition. In this case, the electronic device 100 may explore a state space based on metacognition. The electronic device 100 may estimate an uncertainty value (q) for the state space while exploring the first area of the state space. Furthermore, the electronic device 100 may determine a second area in the state space based on the uncertainty value (q), and may explore the second area.

In the early phase of learning, the electronic device 100 may show the human-like metacognition ability for a local area as illustrated in FIG. 6(a), and may show the human-like metacognition ability for a global area as illustrated in FIG. 6(b). That is, in the early phase of learning, the electronic device 100 may effectively use the metacognition ability for learning for the global area, for example, overall environment learning in the state space. In the late phase of learning, the electronic device 100 may show the metacognition ability for a local area as illustrated in FIG. 7(a), and may show the metacognition ability for a global area as illustrated in FIG. 7(b). That is, in the late phase of learning, the electronic device 100 may effectively the metacognition ability for learning for the local area, for example, detailed environment learning in the state space. Accordingly, the electronic device 100 may determine the global area as a first area and determine the local area as a second area.

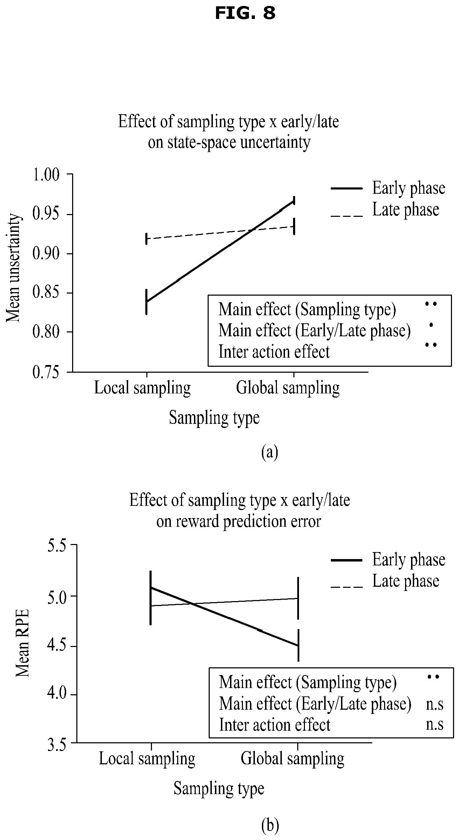

In this case, the electronic device 100 may determine the second area so that the uncertainty value (q) is reduced. Accordingly, as illustrated in FIG. 8(a), the uncertainty value (q) for the state space can be reduced during a learning process. That is, the uncertainty value (q) can be reduced from an uncertainty value (q) according to the global area in the late phase of learning to an uncertainty value (q) according to the local area in the late phase of learning. According to one embodiment, the electronic device 100 may determine the second area with the goal of reducing the uncertainty value (q) and obtaining a reward. Accordingly, as illustrated in FIG. 8(b), a reward for the state space can be obtained during a learning process. That is, a reward value can be reduced from a reward value according to the global area in the late phase of learning to a reward value according to the local area in the late phase of learning.

The electronic device 100 according to various embodiments us for highly efficient exploration based on metacognition-based, and may include the input module 110 configured to input state information and the processor 140 connected to the input module 110 and configured to process state information.

According to various embodiments, the processor 140 may be configured to estimate an uncertainty value (q) for a state space while exploring a first area in the state space, determine a second area in the state space based on the uncertainty value (q), and to explore the second area.

According to various embodiments, the processor 140 may be configured to detect a state vector ($x_t$) by combining state information (X) of a first area in a state space and to measure an uncertainty value (q) based on the state vector ($x_t$).

According to various embodiments, the processor 140 may be configured to update an uncertainty cumulative value ($Q_{q\_r}(s, a)$) based on an uncertainty value (q), to compute a prediction error value ($\delta_{UPE+RPE}$) for a second area using the uncertainty cumulative value ($Q_{q\_r}(s, a)$), and to determine the second area based on the prediction error value ($\delta_{UPE+RPE}$).

According to various embodiments, the processor 140 may be configured to measure an uncertainty value (q) based on the proximity of state information (X) and a state vector ($x_t$).

According to various embodiments, the processor 140 may be configured to update an uncertainty cumulative value ($Q_{q\_r}(s, a)$) based on an uncertainty value (q), to determine a second area differently from a first area when the uncertainty cumulative value ($Q_{q\_r}(s, a)$) is a threshold value or more, and to determine the second area identically with the first area when the uncertainty cumulative value ($Q_{q\_r}(s, a)$) is less than the threshold value.

According to various embodiments, the processor 140 may be configured to determine a second area differently from a first area when a prediction error value ($\delta_{UPE+RPE}$) is a threshold value or more and to determine the second area identically with the first area when the prediction error value ($\delta_{UPE+RPE}$) is less than the threshold value.

According to various embodiments, the processor 140 may be further configured to embed state information of a high-dimensional environment in a low-dimensional state space.

According to various embodiments, the processor 140 may be configured to determine a second area so that the range of the second area is narrower than the range of a first area.

According to various embodiments, the processor 140 may be configured to update an uncertainty cumulative value ($Q_{q\_r}(s, a)$) based on a reward prediction value ($r_{t+1}$) for a state space along with an uncertainty value (q).

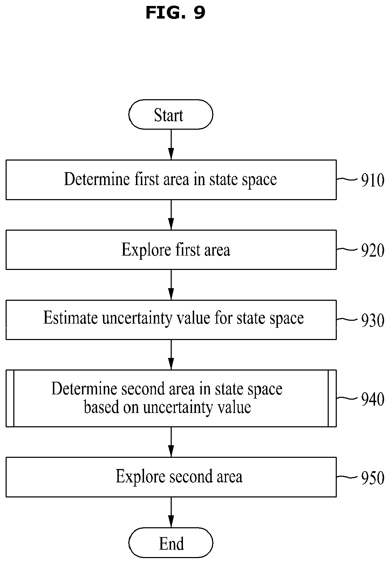

FIG. 9 is a diagram illustrating an operating method of the electronic device 100 according to various embodiments.

Referring to FIG. 9, at operation 910, the electronic device 100 may determine a first area in a state space. To this end, the electronic device 100 may embed state information of a high-dimensional environment in a low-dimensional state space. In this case, the state information may be input by the input module 110 so that the state information can be processed by the processor 140. Accordingly, the processor 140 may determine the first area in the low-dimensional state space. For example, the processor 130 may determine a global area as the first area. In this case, the global area is different from a local area, and the range of the global area may be wider than the range of the local area.

At operation 920, the electronic device 100 may explore the first area. At this time, the processor 140 may detect a state vector ($x_t$) by combining state information ($X \in \mathbb{R}^{m \times n}$) of the first area in the state space, as illustrated in FIG. 2. To this end, the processor 140 may sample the first area.

At operation 930, the electronic device 100 may estimate an uncertainty value (q) for the state space. In this case, the processor 140 may measure the uncertainty value (q) based on the state vector ($x_t$). For example, the processor 140 may detect the state vector ($x_t$) through a linear combination of state information (X), and may measure a linear combination coefficient as an uncertainty value (q). In this case, the processor 140 may measure the uncertainty value (q) based on the proximity of the state information (X) and the state vector ($x_t$). For example, the processor 140 may detect a singular vector ($U = [u_1, u_2, \cdots u_n] \in \mathbb{R}^{n \times n}$) based on the state information (X) as represented in Equation 6, and may measure the uncertainty value (q) as represented in Equation 7. The processor 140 may measure the uncertainty value (q) based on the proximity of the singular vector (U) and the state vector ($x_t$). For example, as the singular vector (U) and the state vector ($x_t$) approach, the uncertainty value (q) may be smaller.

$$X^T X = U \Lambda U^T \qquad \qquad ...(6)$$

In this case, $U = [u_1, u_2, \cdots u_n] \in \mathbb{R}^{n \times n}$ the singular vector (U) may be an orthogonal singular vector set of $\Lambda = \mathrm{diag}(\lambda_1, \lambda_2 ... \lambda_n)$ and $X^T X$ in which related singular values are $\lambda_1 \geq \lambda_2 \geq ... \geq \lambda_k \geq 1 > \lambda_{k+1} \geq \lambda_n \geq 0$. $\overline{U} = [u_, \cdots u_k] \in \mathbb{R}^{n \times k}$ and $\overline{\Lambda} = (\lambda_1 ... \lambda_k) \in \mathbb{R}^{k \times k}$ may be defined based on Equation 1.

$$q = X \overline{U} \overline{\Lambda}^{-1} \overline{U}^T x_t \in \mathbb{R}^m$$

$$...(7) X^T X = U \Lambda U^T$$

According to one embodiment, the processor 140 may operate based on a behavior algorithm, such as that illustrated in FIG. 3, and a learning model, such as that illustrated in FIG. 4. The processor 140 may detect the state vector ($x_t$) from state information (X) of the first area while exploring the first area. At this time, the processor 140 may detect a reward prediction value ($r_{t+1}$) for the state space while exploring the first area. The processor 140 may estimate an uncertainty value ($q_{t+1}$) for the state space.

At operation 940, the electronic device 100 may determine a second area in the state space based on the uncertainty value (q). The processor 140 may determine the range of the second area identically with the range of the first area. Alternatively, the processor 140 may determine the range of the second area differently from the range of the first area. In this case, the processor 140 may determine the second area so that the range of the second area is narrower than the range of the first area. In this case, the processor 140 may determine the second area so that the uncertainty value (q) can be reduced. For example, the processor 140 may determine a local area as the second area.

According to one embodiment, the processor 140 may update an uncertainty cumulative value ($Q_{q\_r}(s, a)$) based on the uncertainty value ($q_{t+1}$) as represented in Equation 8. Furthermore, the processor 140 may compare the uncertainty cumulative value ($Q_{q\_r}(s, a)$) with a predetermined threshold value. When the uncertainty cumulative value is the threshold value or more, the processor 140 may determine the second area differently from the first area. For example, when the first area is a global area, the processor 140 may determine the second area as a local area. When the uncertainty cumulative value ($Q_{q\_r}(s, a)$) is less than the threshold value, the processor 140 may determine the second area identically with the first area. For example, if the first area is a global area, the processor 140 may determine the first area as a global area.

$$Q_{q\_r}(s,a) = E\left[(\frac{1}{q_{t+1}} + r_{t+1}) + \gamma(\frac{1}{q_{t+2}} + r_{t+2}) + \cdots \middle| s_t = s, a_t = a\right] \quad \dots (8)$$

In this case, $\gamma$ indicates a temporal discount factor, and may be fixed to 1.

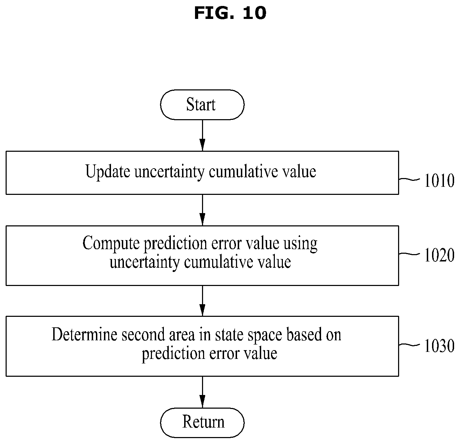

FIG. 10 is a diagram illustrating an operation of determining a second area in FIG. 9.

Referring to FIG. 10, at operation 1010, the electronic device 100 may update an uncertainty cumulative value ($Q_{q\_r}(s, a)$) based on the uncertainty value ($q_{t+1}$). The processor 140 may update the uncertainty cumulative value ($Q_{q\_r}(s, a)$) based on the uncertainty value ($q_{t+1}$) as represented in Equation 9. In this case, the processor 140 may update the uncertainty cumulative value ($Q_{q\_r}(s, a)$) based on a reward prediction value ($r_{t+1}$) along with the uncertainty value ($q_{t+1}$).

$$Q_{q\_r}(s,a) = E\left[(\frac{1}{q_{t+1}} + r_{t+1}) + \gamma(\frac{1}{q_{t+2}} + r_{t+2}) + \cdots \middle| s_t = s, a_t = a\right] \quad \dots(9)$$

In this case, $\gamma$ indicate a temporal discount factor, and may be fixed to 1.

At operation 1020, the electronic device 100 may compute a prediction error value ($\delta_{UPE+RPE}$) using the uncertainty cumulative value ($Q_{q\_r}(s, a)$). The processor 140 may compute the prediction error value ($\delta_{UPE+RPE}$) for the state space using the uncertainty cumulative value ($Q_{q\_r}(s, a)$) as represented in Equation 10. In this case, the processor 140 may compute the prediction error value ($\delta_{UPE+RPE}$) based on the reward prediction value ($r_{t+1}$) along with the uncertainty value ($q_{t+1}$). Furthermore, the processor 140 may compute a critic's value based on the prediction error value ($\delta_{UPE+RPE}$) as represented in Equation 11.

$$\delta_{UPE+RPE} = \left(\frac{1}{q_{t+1}} + r_{t+1}\right) + \gamma Q_{q\_r}(s_{t+1}, a_{t+1}) - Q_{q_r}(s_t, a_t) \quad \dots(10)$$

$$\Delta Q_{q\_r}(s,a) = \alpha \delta_{UPE+RPE} \quad \dots(11)$$

In this case, $\alpha$ may indicate a learning speed.

At operation 1030, the electronic device 100 may determine a second area in the state space based on the prediction error value ($\delta_{UPE+RPE}$). The electronic device 100 may determine the second area so that an uncertainty value (q) can be reduced. In this case, the processor 140 may compare the prediction error value ($\delta_{UPE+RPE}$) with a predetermined threshold value. When the prediction error value ($\delta_{UPE+RPE}$) is the threshold value or more, the processor 140 may determine the second area differently from the first area. For example, when a first area is a global area, the processor 140 may determine the second area as a local area. When the prediction error value ($\delta_{UPE+RPE}$) is less than the threshold value, the processor 140 may determine the second area identically with the first area. For example, if the first area is a global area, the processor 140 may determine the second area as a global area.

According to one embodiment, the processor 140 may determine the second area based on the prediction error value ($\delta_{UPE+RPE}$). In this case, the processor 140 may determine the second area based on a critic's value. In this case, the processor 140 may determine the second area with the goal of reducing the uncertainty value ($q_{t+1}$) and obtaining a reward. In this case, performance of the learning model of the electronic device 100 may be better than performance of another learning model as illustrated in FIG. 5 because the learning model of the electronic device 100 takes the uncertainty value ($q_{t+1}$) into consideration in determining the second area. Furthermore, performance of the learning model of the electronic device 100 may be better than performance of another learning model as illustrated in FIG. 5 because the learning model of the electronic device 100 additionally takes the reward prediction value ($r_{t+1}$) into consideration along with the uncertainty value ($q_{t+1}$).

Thereafter, the electronic device 100 may return to the process of FIG. 9.

At operation 950, the electronic device 100 may explore the second area.

An operating method of the electronic device 100 according to various embodiments is a method for highly efficient exploration based on metacognition, and may include estimating an uncertainty value (q) for a state space while exploring a first area in the state space, determining a second area in the state space based on the uncertainty value (q), and exploring the second area.

According to various embodiments, the estimating of the uncertainty value (q) for the state space may include detecting a state vector ($x_t$) by combining state information (X) of the first area in the state space and measuring an uncertainty value (q) based on the state vector ($x_t$).

According to various embodiments, the determining of the second area based on the uncertainty value (q) may include updating an uncertainty cumulative value ($Q_{q\_r}(s, a)$) based on the uncertainty value (q), computing a prediction error value ($\delta_{UPE+RPE}$) for the second area using the uncertainty cumulative value ($Q_{q\_r}(s, a)$), and determining the second area based on the prediction error value ($\delta_{UPE+RPE}$).

According to various embodiments, the measuring of the uncertainty value (q) based on the state vector ($x_t$) may include measuring the uncertainty value (q) based on the proximity of the state information (X) and the state vector ($x_t$).

According to various embodiments, the determining of the second area based on the uncertainty value (q) may include updating the uncertainty cumulative value ($Q_{q\_r}(s, a)$) based on the uncertainty value (q) and determining the second area differently from the first area when the uncertainty cumulative value ($Q_{q\_r}(s, a)$) is a threshold value or more.

According to various embodiments, the determining of the second area based on the uncertainty value (q) may further include determining the second area identically with the first area when the uncertainty cumulative value ($Q_{q\_r}(s, a)$) is less than the threshold value.

According to various embodiments, the determining of the second area based on the prediction error value ($\delta_{UPE+RPE}$) may include determining the second area differently from the first area when the prediction error value ($\delta_{UPE+RPE}$) is the threshold value or more.

According to various embodiments, the determining of the second area based on the prediction error value ($\delta_{UPE+RPE}$) may further include determining the second area identically with the first area when the prediction error value ($\delta_{UPE+RPE}$) is less than the threshold value.

According to various embodiments, the operating method of the electronic device 100 may further include embedding state information of a high-dimensional environment in a low-dimensional state space.

According to various embodiments, the determining of the second area based on the uncertainty value (q) may include determining the second area so that the range of the second area is narrower than the range of the first area.

According to various embodiments, the updating of the uncertainty cumulative value ($Q_{q\_r}(s, a)$) based on the uncertainty value (q) may include updating the uncertainty cumulative value ($Q_{q\_r}(s, a)$) using a reward prediction value ($r_{t+1}$) for the state space along with the uncertainty value (q).

The embodiments of this document and the terms used in the embodiments are not intended to limit the technology described in this document to a specific embodiment, but should be construed as including various changes, equivalents and/or alternatives of a corresponding embodiment. Regarding the description of the drawings, similar reference numerals may be used in similar elements. An expression of the singular number may include an expression of the plural number unless clearly defined otherwise in the context. In this document, an expression, such as "A or B", "at least one of A or/and B", "A, B or C" or "at least one of A, B and/or C", may include all of possible combinations of listed items together. Expressions, such as "a first," "a second," "the first" and "the second", may modify corresponding elements regardless of the sequence and/or importance, and are used to only distinguish one element from the other element and do not limit corresponding elements. When it is described that one (e.g., first) element is "(operatively or communicatively) connected to" or "coupled with" the other (e.g., second) element, one element may be directly connected to the other element or may be connected to the other element through another element (e.g., third element).

The "module" used in this document includes a unit configured with hardware, software or firmware, and may be interchangeably used with a term, such as logic, a logical block, a part or a circuit. The module may be an integrated part, a minimum unit to perform one or more functions, or a part thereof. For example, the module may be configured with an application-specific integrated circuit (ASIC).

Various embodiments of this document may be implemented in the form of software including one or more instructions stored in a storage medium (e.g., the memory 130) readable by a machine (e.g., the electronic device 100). For example, the processor (e.g., the processor 140) of the machine may fetch at least one of one or more stored instructions from a storage medium, and may execute the one or more instructions. This enables the machine to perform at least one function based on the fetched at least one instruction. The one or more instructions may include code generated by a complier or code executable by an interpreter. The storage medium readable by the machine may be provided in the form of a non-transitory storage medium. In this case, "non-transitory" means that a storage medium is a tangible device and does not include a signal (e.g., electromagnetic waves). The term is not used regardless of whether data is semi-persistently stored in a storage medium and whether data is temporally stored in a storage medium.

According to various embodiments, each (e.g., module or program) of the described elements may include a single entity or a plurality of entities. According to various embodiments, one or more of the aforementioned elements or operations may be omitted or one or more other elements or operations may be added. Alternatively or additionally, a plurality of elements (e.g., modules or programs) may be integrated into one element. In such a case, the integrated elements may perform one or more functions of each of a plurality of elements identically with or similar to that performed by a corresponding one of the plurality of elements before the elements are integrated. According to various embodiments, module, operations performed by a program or other elements may be executed sequentially, in parallel, repeatedly, or heuristically, or one or more of the operations may be executed in different order or may be omitted, or one or more other operations may be added.

According to various embodiments, the electronic device can explore an environment based on metacognition in which a metacognition theory and machine learning have been combined. The electronic device can learn a low-dimensional environment structure model by exploring an environment with high efficiency. In this case, the environment may have an infinite amount of state information and a very complicated structure. In this case, the electronic device may determine an exploration area by computing an estimated value of an environment structure of a learning model based on the metacognition theory and the certainty of the learning model for the estimated value itself. In this case, the estimated value of the environment structure may correspond to the aforementioned state vector, and the certainty may correspond to the aforementioned uncertainty value. According to various embodiments, the electronic device can maintain high performance while operating similar to a method in which the human actually learn.

**Claims**

1.    A method for an electronic device to explore an environment with high efficiency based on metacognition, the method comprising:

       estimating an uncertainty value for a state space while exploring a first area in the state space;
       determining a second area in the state space based on the uncertainty value; and
       exploring the second area.

2.    The method of claim 1, wherein the estimating of the uncertainty value for the state space comprises:

       detecting a state vector by combining state information of the first area in the state space; and
       measuring the uncertainty value based on the state vector.

3.    The method of claim 1, wherein the determining of the second area based on the uncertainty value comprises:

       updating an uncertainty cumulative value based on the uncertainty value;
       computing a prediction error value for the second area using the uncertainty cumulative value; and
       determining the second area based on the prediction error value.

4.    The method of claim 2, wherein the measuring of the uncertainty value based on the state vector comprises:
       measuring the uncertainty value based on a proximity of the state information and the state vector.

5.    The method of claim 1, wherein the determining of the second area based on the uncertainty value comprises:

       updating an uncertainty cumulative value based on the uncertainty value; and

determining the second area differently from the first area when the uncertainty cumulative value is a threshold value or more.

6. The method of claim 5, wherein the determining of the second area based on the uncertainty value further comprises: determining the second area identically with the first area when the uncertainty cumulative value is less than the threshold value.

7. The method of claim 3, wherein the determining of the second area based on the prediction error value comprises: determining the second area differently from the first area when the prediction error value is a threshold value or more.

8. The method of claim 7, wherein the determining of the second area based on the prediction error value comprises: determining the second area identically with the first area when the prediction error value is less than the threshold value.

9. The method of claim 1, further comprising:
embedding state information of a high-dimensional environment in a low-dimensional state space.

10. The method of claim 1, wherein the determining of the second area based on the uncertainty value comprises: determining the second area so that a range of the second area is narrower than a range of the first area.

11. The method of claim 3, wherein the updating of the uncertainty cumulative value based on the uncertainty value comprises updating the uncertainty cumulative value using a reward prediction value for the state space along with the uncertainty value.

12. An electronic device for highly efficient exploration based on metacognition, comprising:

an input module configured to input state information; and
a processor connected to the input module and configured to process the state information,
wherein the processor is configured to:

estimate an uncertainty value for a state space while exploring a first area in the state space,
determine a second area in the state space based on the uncertainty value, and
explore the second area.

13. The electronic device of claim 12, wherein the processor is configured to:

detect a state vector by combining state information of the first area in the state space, and
measure the uncertainty value based on the state vector.

14. The electronic device of claim 12, wherein the processor is configured to:

update an uncertainty cumulative value based on the uncertainty value,
compute a prediction error value for the second area using the uncertainty cumulative value, and
determine the second area based on the prediction error value.

15. The electronic device of claim 13, wherein the processor is configured to measure the uncertainty value based on a proximity of the state information and the state vector.

**FIG. 1**

<u>100</u>

```
┌──────────────┐     ┌──────────────┐     ┌──────────────┐
│ Input module │─────│  Processor   │─────│ Output module│
│    (110)     │     │    (140)     │     │    (120)     │
└──────────────┘     └──────┬───────┘     └──────────────┘
                            │
                     ┌──────┴───────┐
                     │   Memory     │
                     │    (130)     │
                     └──────────────┘
```

**FIG. 2**

**FIG. 3**

| Algorithm S2: Uncertainty + value learning model |
|---|

Input: Previous state space samples X, present state space input $x_t$

    forall timestep t=1,2,3...do

           Observe state space input $x_t$

           Set $a_t = x_t$

           Observe reward $r_{t+1}$

           Estimate state uncertainty $q_{t+1}$

           Compute TD error:

$$\delta_{\text{UPE+RPE}} = \left( \frac{1}{q_{t+1}} + r_{t+1} \right) + \gamma\, Q_{q\_r}(s_{t+1}, a_{t+1}) - Q_{qr}(s_t, a_t)$$

$$\text{where } Q_{q\_r}(s,a) = E\left[ \left( \frac{1}{q_{t+1}} + r_{t+1} \right) + \gamma \left( \frac{1}{q_{t+2}} + r_{t+2} \right) + \cdots \;\middle|\; s_t = s,\, a_t = a \right]$$

           Updatecritic;

$$\triangle Q_{q\_r}(s,a) = \alpha\, \delta_{\text{UPE+RPE}}$$

    end

EP 3 739 520 A1

# FIG. 4

**FIG. 5**

## FIG. 6

Local sampling in early phase

(a)

Global sampling in early phase

P (two-tailed)=0.0408

(b)

**FIG. 7**

Local sampling in late phase

(a)

Global sampling in late phase

(b)

**FIG. 8**

Effect of sampling type x early/late
on state-space uncertainty

(a)

Effect of sampling type x early/late
on reward prediction error

(b)

# FIG. 9

```
                    ┌─────────┐
                    │  Start  │
                    └─────────┘
                         │
                         ▼
    ┌───────────────────────────────────────┐
    │    Determine first area in state space │─── 910
    └───────────────────────────────────────┘
                         │
                         ▼
    ┌───────────────────────────────────────┐
    │             Explore first area         │─── 920
    └───────────────────────────────────────┘
                         │
                         ▼
    ┌───────────────────────────────────────┐
    │   Estimate uncertainty value for state space │─── 930
    └───────────────────────────────────────┘
                         │
                         ▼
    ┌───────────────────────────────────────┐
    │    Determine second area in state space│─── 940
    │        based on uncertainty value      │
    └───────────────────────────────────────┘
                         │
                         ▼
    ┌───────────────────────────────────────┐
    │           Explore second area          │─── 950
    └───────────────────────────────────────┘
                         │
                         ▼
                    ┌─────────┐
                    │   End   │
                    └─────────┘
```

# FIG. 10

```
                    ┌─────────┐
                    │  Start  │
                    └─────────┘
                         │
                         ▼
┌──────────────────────────────────────────────┐
│       Update uncertainty cumulative value      │────  1010
└──────────────────────────────────────────────┘
                         │
                         ▼
┌──────────────────────────────────────────────┐
│        Compute prediction error value using     │────  1020
│          uncertainty cumulative value           │
└──────────────────────────────────────────────┘
                         │
                         ▼
┌──────────────────────────────────────────────┐
│     Determine second area in state space based on│────  1030
│             prediction error value              │
└──────────────────────────────────────────────┘
                         │
                         ▼
                    ┌─────────┐
                    │ Return  │
                    └─────────┘
```

Europäisches
Patentamt

European
Patent Office

Office européen
des brevets

# EUROPEAN SEARCH REPORT

Application Number

EP 20 15 5347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SURAJ NARAYANAN SASIKUMAR: "Exploration in Feature Space for Reinforcement Learning", ARXIV.ORG, CORNELL UNIVERSITY LIBRARY, 201 OLIN LIBRARY CORNELL UNIVERSITY ITHACA, NY 14853, 5 October 2017 (2017-10-05), XP080826525, * page 3, paragraph 1.3 * * page 34, paragraph 4.1.2 - page 35 * * page 43, paragraph 4.2.5 * ----- | 1-15 | INV. G06N3/00 G06N20/00 |
| X | MUHAMMAD BURHAN HAFEZ ET AL: "Deep Intrinsically Motivated Continuous Actor-Critic for Efficient Robotic Visuomotor Skill Learning", ARXIV.ORG, CORNELL UNIVERSITY LIBRARY, 201 OLIN LIBRARY CORNELL UNIVERSITY ITHACA, NY 14853, 26 October 2018 (2018-10-26), XP081417828, * page 17, paragraph 2.2 * * page 19, paragraph 2.3.1 * ----- | 1-15 | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 23 July 2020 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)